Europäisches Patentamt

European Patent Office

Office européen des brevets

(11) Veröffentlichungsnummer: **0 116 674**
**B1**

# (12) EUROPÄISCHE PATENTSCHRIFT

(45) Veröffentlichungstag der Patentschrift:
14.01.87

(51) Int. Cl.⁴: **B 23 Q 3/10**

(21) Anmeldenummer: **83105654.4**

(22) Anmeldetag: **09.06.83**

(54) **Verfahren zur Herstellung einer Meisterplatte.**

(30) Priorität: **15.01.83 DE 3301178**

(43) Veröffentlichungstag der Anmeldung:
**29.08.84 Patentblatt 84/35**

(45) Bekanntmachung des Hinweises auf die Patenterteilung:
**14.01.87 Patentblatt 87/3**

(84) Benannte Vertragsstaaten:
**BE CH DE FR GB IT LI SE**

(56) Entgegenhaltungen:
**DE-A-1 448 404**
**DE-A-2 232 387**
**DE-B-2 557 701**
**DE-B-2 626 155**
**GB-A-981 329**
**US-A-2 698 547**
**US-A-3 588 989**

(73) Patentinhaber: **Blümle, Rudi, Schwarzbachstr. 52, D-7000 Stuttgart 80 (DE)**

(72) Erfinder: **Blümle, Rudi, Schwarzbachstr. 52, D-7000 Stuttgart 80 (DE)**

(74) Vertreter: **Otte, Peter, Dipl.- Ing., Tiroler Strasse 15, D-7250 Leonberg (DE)**

## Beschreibung

Stand der Technik

Die Erfindung betrifft ein Verfahren nach der Gattung des Hauptanspruchs.

Aufnahmeplatten schlechthin, die etwa zum paßgenauen und präzisen Aufspannen und Befestigen von zu bearbeitenden Werkstücken oder für den Vorrichtungsbau geeignet sind, und in denen sich Einsatzbuchsen enthaltende Bohrungen im genauen Rasterabstandsmaß befinden, sind bekannt (DE-OS 22 32 387, Druckschrift der Firma VFW-Focker "VAPA-System" sowie DE-PS 25 57 701 sowie DE-AS 26 26 155).

Bei den an erster Stelle genannten Veröffentlichungen (DE-OS 22 32 387, Druckschrift der VFW-Focker) werden die Aufnahmeplatten so hergestellt, daß zunächst in der Platte abstandsgenaue Bohrungen im Rastersystem erzeugt und in diese Bohrungen anschließend im Durchmesser mit den Bohrungen übereinstimmende Einsatzbuchsen eingesetzt werden. Die Erstellung der Bohrungen erfolgt mittels numerisch gesteuerter Bearbeitungsmaschinen von entsprechend hoher Qualität und Genauigkeit.

Bei den restlichen Veröffentlichungen (DE-PS 25 57 701, DE-AS 26 26 155) werden die Aufnahmeplatten allerdings auf eine insofern völlig unterschiedliche Weise hergestellt, als sie die erforderliche hohe Präzision der Einsatzbuchsenanordnung im Rastersystem von einer Meisterplatte übernehmen, die für die Positionierung der Einsatzbuchsen in ihren Bohrungen verantwortlich ist. Im einzelnen wird zur Herstellung solcher Aufnahmeplatten für das Aufspannen und Befestigen von zu bearbeitenden Werkstücken oder für den Vorrichtungsbau so vorgegangen, daß in die Ausgangsplatte Bohrungen mit normaler Genauigkeit, also ohne Ansprüche an hohe Präzision, im vorgegebenen Rasterabstandsmaß gesetzt werden; in diese Bohrungen werden dann Einsatzbuchsen mit einem geringeren Durchmesser als der Bohrungsdurchmesser unter Bildung eines ringförmigen, allseitigen Zwischenraums eingesetzt und anschließend werden die Abstände der eingesetzten Einsatzbuchsen zueinander mit Hilfe einer in einem hochpräzisen Rasterabstandsmaß Stifte oder jedenfalls Positionierelemente aufweisenden Meisterplatte als Schablonenlehre bestimmt. Die lediglich einmal vorhandene Meisterplatte überträgt daher die ihr innewohnende Genauigkeit sozusagen durch Vererbung auf die Genauigkeit der jeweils hergestellten Aufnahmeplatte, indem nämlich durch Einführen eines aushärtbaren Kunststoffmaterials in die Zwischenräume zwischen dem Bohrungsdurchmesser und dem Außendurchmesser der Einsatzbuchse eine Fixierung der Buchsen in den Bohrungen nach Aushärtung des Kunststoffmaterials erzielt wird, wobei nach der Trennung der Aufnahmeplatte von der Meisterplatte die Einsatzbuchsen das hochpräzise Rasterabstandsmaß der Meisterplatte übertragen bekommen haben und beibehalten.

Bei der Herstellung solcher Aufnahmeplatten, deren Paß- oder Einsatzbuchsen im Ringraum ihrer Aufnahmebohrungen durch ein Kunststoffmaterial gehalten sind, sind die Genauigkeitsansprüche an die Meisterplatte besonders hoch, da natürlich durch die Übertragung auf die jeweilige Tochter-Aufnahmeplatte Toleranzen, auch wenn diese extrem gering sind, hingenommen werden müssen, die bei den gestellten und tatsächlich auch erzielten Genauigkeiten der jeweiligen Aufnahmeplatte eine über diese Genauigkeit noch hinausgehende Präzisionspositionierung der fixierenden Stifte der Meisterplatte erforderlich machen.

Der Erfindung liegt daher die Aufgabe zugrunde, eine solche Meisterplatte herzustellen, die dann ihrerseits wieder als Schablonenlehre für die Herstellung von Hochpräzisions-Aufnahmeplatten im Vorrichtungsbau und bei der Werkstückbearbeitung dient.

Die Erfindung löst diese Aufgabe mit den kennzeichnenden Merkmalen des Hauptanspruchs und hat den Vorteil, daß eine Präzision in der Position der Paßbohrungen oder Paßstifte im Rastersystem erreicht wird, die derart hoch ist, daß auch bei der abdruckartigen Vervielfältigung von Präzisions-Aufnahmeplatten auf der Basis der Meisterplatte als Schablonenlehre die Aufnahmeplatten einen für unerreichbar erachteten Genauigkeitsmaßstab erzielen.

Der Hauptgrund für die Hochpräzision der Meisterplatte, wie sie vorliegende Erfindung liefern und anschließend auf die Aufnahmeplatten übertragen kann, liegt darin, daß aufgrund von der Erfindung zugrundeliegenden Erkenntnissen jede Art von Bearbeitung vermieden werden muß, die einen Energieaufwand darstellt, da sich die aufgebrachte Energie unweigerlich als Wärme in der Meister- und/oder der Aufnahmeplatte wiederfindet und dort einen Wärmeverzug bewirkt, der zu nicht mehr hinnehmbaren Toleranzen und Ungenauigkeiten führt.

Basierend auf dieser Erkenntnis vermeidet die vorliegende Erfindung grundsätzlich eine spanabhebende Verformung bei der Meisterplatte dort, wo Genauigkeiten erzielt werden müssen. Die in die Meisterplatte eingebrachten Bohrungen dienen lediglich als grobe Anhaltspunkte für die Position von Einsatzbuchsen, deren Position durch Messung bestimmt wird, und zwar vorzugsweise unter Verwendung von sogenannten Endmaßen, die ein absolutes Nullmaß der jeweils gewünschten Distanzbeziehung aufweisen.

Da es nicht möglich ist, eine Messung unmittelbar in die Positionsbeziehung umzusetzen, wird entsprechend vorliegender Erfindung ein Zwischenschritt einer sogenannten Vorfixierung oder Zwischenbefestigung der Präzisionseinsatzbuchse lose in ihrer zugeordneten Aufnahmebohrung in der Meisterplatte vorgenommen und nachdem sämtliche dieser Positionen im vorgegebenen Rasterabstandsmaß eindeutig fixiert und in ihrer Genauigkeit durch erneute Messung bestätigt sind, erfolgt ein Vergießen der Buchsen in den Aufnahmebohrungen mit Hilfe eines aushärtbaren Kunststoffmaterials.

Weitere Ausgestaltungen und Verbesserungen der Erfindung sind Gegenstand der Unteransprüche und in diesen sowie in der nachfolgenden Beschreibung wiedergegeben.

Zeichnung

Ausführungsbeispiele der Erfindung sind in der Zeichnung dargestellt und werden in der nachfolgenden Beschreibung näher erläutert. Es zeigen:

Fig. 1 in stark schematisierter Darstellung einen Ausschnitt aus einer Grundplatte in einer bestimmten Bearbeitungsposition zur Herstellung der Meisterplatte und

Fig. 2 einen Detailausschnitt einer in eine Bohrung der Meisterplatte eingesetzte Einsatzpaßbuchse mit Paßstift.

Beschreibung der Ausführungsbeispiele

Der Grundgedanke vorliegender Erfindung besteht darin, bei dem Aufbau und der Anordnung der Einsatzpaßbuchsen in der Grundplatte zur Herstellung der Meisterplatte alle Maßnahmen zu vermeiden, die einen Energieaufwand bedeuten, der notwendigerweise von der Meisterplatte aufgenommen und dabei unweigerlich in Warme umgesetzt wird; in Wärme, die zu einem nicht akzeptablen Wärmeverzug führt. Hierunter fallen aber nicht nur die groben Bearbeitungsvorgänge wie spanabhebende Verformung u.dgl., sondern auch solche subtilen Arbeitsschritte, wie sie beispielsweise das Festziehen von Schrauben bedeuten.

Untersuchungen haben nämlich ergeben, daß schon das Festziehen von Schrauben mit entsprechender Kraftaufwendung einen derartigen Wärmeverzug bedeutet, daß sich im Endeffekt Fehler in der Meisterplatte aufbauen, die von Einsatzpaßbuchsen an einem Ende der Platte zum anderen bis zu 2/10 mm betragen können.

Daher besteht die Grundkonzeption der vorliegenden Erfindung darin, die Einsatzpaßbuchsen in ihren grob vorgebohrten Aufnahmebohrungen in ihrer endgültigen Präzisionsposition zunächst durch Messung zu bestimmen, dann durch vorsichtige Vorfixierung in der eingemessenen Position festzulegen und anschließend durch Einbringen eines Vergußmaterials, beispielsweise von der Grundplattenrückseite aus und durch dessen Aushärtung endzufixieren.

Im einzelnen wird hierzu wie folgt vorgegangen, wobei zum besseren Verständnis auch mit numerischen Maßangaben gearbeitet wird und die Durchführung vorliegender Erfindung bis ins Detail eine Erläuterung erfährt; es versteht sich aber, daß weder diese Maßangaben noch einzelne Detailschritte die Erfindung insoweit begrenzen.

In einer Ausgangsgrindplatte 1 werden im gegebenen Rasterabstandsmaß entsprechend den gewünschten Koordinatenabständen, wobei hier selbstverständlich auch Polarkoordinaten oder jedes andere denkbare Koordinatenmaß in Frage kommt, Vorbohrungen 2 gesetzt, die mit normaler, beispielsweise durch geeignete Vielfachbohrmaschinen, auch in numerisch gesteuerter Ausführung erhältlicher Genauigkeit gebohrt werden. Dabei wird der Durchmesser dieser Vorbohrungen wesentlich größer gewählt als der Durchmesser von in diesen Vorbohrungen anschließend einzusetzenden Einsatzpaßbuchsen. Als numerisches Ausführungsbeispiel können zum besseren Verständnis die folgenden Angaben zugrundegelegt werden, wobei dies natürlich nur für eine gewünschte Ausführungsform von Rasterabstandsmaß und verwendeten Koordinatennetz gilt. Die Vorbohrungen haben einen Abstand von 80 mm zueinander, jeweils von Mitte zu Mitte gemessen, der Durchmesser der Vorbohrungen beträgt beispielsweise 40 mm.

In diese Vorbohrungen werden Einsatzpaßbuchsen eingeführt; wobei diese Einsatzpaßbuchsen im allgemeinen Fall aber Mittel aufweisen, um nach Ausmessen ihrer Präzisionsposition in der Vorbohrung vorfixiert, also in einer geeigneten Weise an der Aufnahmeplatte befestigt zu werden. Diese Befestigung ist nicht die Endform der Fixierung der Einsatzpaßbuchsen, sondern dient lediglich dazu, ihnen einen so festen Positionsbezug zur Aufnahmeplatte zu geben, daß in einen Ringraum oder Zwischenraum zwischen dem Buchsenaußendurchmesser und dem Innendurchmesser der Vorbohrung ein aushärtbares Kunststoffmaterial eingegeben und ausgehärtet werden kann.

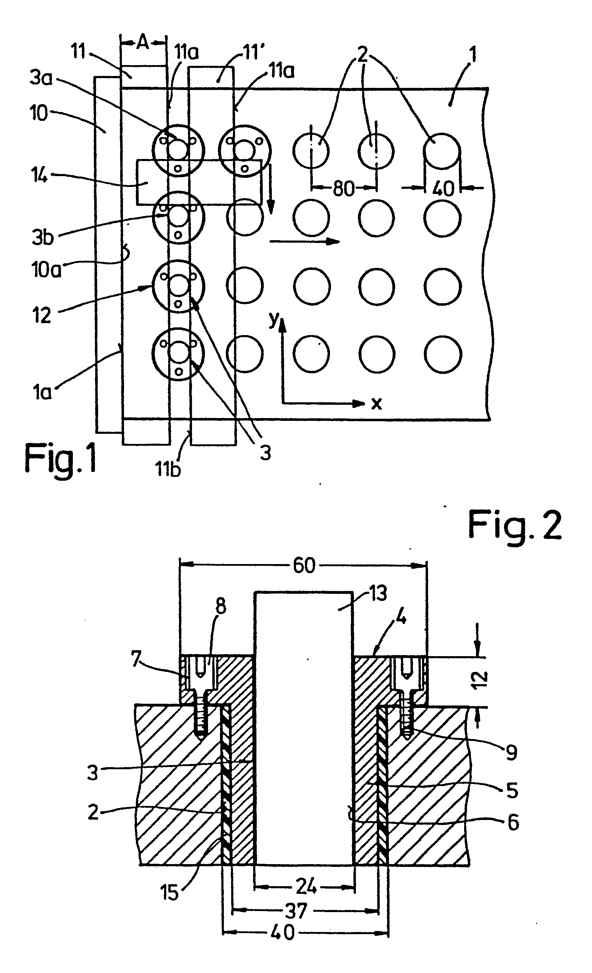

Bei dem in der Zeichnung dargestellten Ausführungsbeispiel bestehen die Mittel zur Vorfixierung aus einem stirnseitigen Randflansch an der Einsatzbuchse, die in Fig. 2 insgesamt mit 3 bezeichnet ist; der Randflansch trägt das Bezugszeichen 4. Führt man die angegebenen numerischen Maßbezeichnungen weiter, dann kann der Außendurchmesser des eigentlichen Buchsenteils 5 37 mm betragen, während der beispielsweise eine Stärke von 12 mm aufweisende Flansch einen Durchmesser von 60 mm hat.

Die Fertigung einer solchen Einsatzpaßbuchse mit Buchsenteil 5 und Flansch 4 wird zunächst wie folgt durchgeführt: Die Bohrung in der Einsatzpaßbuchse mit einem Durchmesser von hier 24 mm wird fertig gehont, also absolut endbearbeitet und anschließend wird die Einsatzpaßbuchse 3 auf einen Dorn gesteckt - dies ist in den Zeichnungen nicht dargestellt, da solche Arbeiten für den Fachmann verständlich sind - und es wird dann der Außendurchmesser und insbesondere der Flansch relativ zur Buchseninnenbohrung 6 geschliffen. Diese Fein- bzw. Endbearbeitung des Flansches erfolgt, damit dieser einwandfrei zentrisch zur Innenbohrung 6 der Einsatzpaßbuchse 3 verläuft und um so eine axiale Ausrichtung der Flanschauflagefläche auf der Grundplatte 1 im genauen Verlauf zur Paßbohrung 6 der Einsatzpaßbuchse zu erzielen. Es ist nämlich der Flansch 4, der entsprechend einem bevorzugten Ausführungsbeispiel der Vorfixierung der jeweiligen Einsatzpaßbuchse 3 nach Messung und vor Endfixierung dient.

Zu diesem Zweck verfügt jeder Flansch über eine vorgegebene Anzahl von über seinen Umfang verteilten Bohrungen, vorzugsweise Senkbohrungen 7, die die als Schrauben ausgebildeten Befestigungsmittel, beim Ausführungsbeispiel Senkschrauben 8, aufnehmen. Durch die Ausbildung von Senkbohrungen 7 lassen sich die Schrauben 8, die Inbusschrauben sind, versenken, so daß sie nicht über die Flanschoberfläche vorstehen. Der Flansch liegt mit seiner unteren Ringfläche auf der Gegenfläche der Aufnahmeplatte 1 auf. Zur Aufnahme der Schrauben 8 bei deren Einschrauben weist die Aufnahmeplatte angrenzend zu den Vorbohrungen 2 entsprechend der Verteilung der Senkbohrungen im jeweiligen Ringflansch 4 der Einsatzpaßbuchsen Gewindebohrungen 9 auf, so daß es möglich ist, über das Einschrauben der Schrauben 8 in die Senkbohrungen 7 am Ringflansch 4 die Einsatzpaßbuchsen auf der Aufnahmeplatte 1 zu befestigen. Es versteht sich und soll gleich an dieser Stelle erwähnt werden, daß der Sitz der Schrauben 8 in ihren Senkbohrungen 7 des Flansches 4 mit so ausreichendem Spiel, auch bezüglich des Schraubenschaftes, ausgebildet ist, daß vor dem Anziehen der Schrauben 8 die jeweilige Einsatzpaßbuchse in beliebigen horizontalen Richtungen hinreichende Justierund Verschiebemöglichkeiten aufweist.

Der nächste Herstellungsschritt besteht dann darin, daß eine erste Reihe von Einsatzpaßbuchsen in die jeweiligen Aufnahmebohrungen 2 der Grundplatte 1 eingesetzt und beispielsweise die Schrauben schon leicht in ihre Gewindebohrungen 8 der Grundplatte eingeschraubt werden, so daß die Paßbuchsen einen gewissen Halt finden.

Ihre Endpositionierung erfolgt durch Messung, indem etwa an eine Seitenfläche 1a der Grundplatte 1, die sauber gearbeitet und entsprechend plan ausgebildet ist, eine erste Anschlagleiste 10 angelegt wird, von deren Innenkante 10a aus dann ein Distanz-Maßstab 11 angeschlagen wird. Dieser Maßstab 11 bildet ein absolutes Nullmaß und ist daher in seiner hier hochgenauer Dickenerstreckung A so bemessen, daß in die Paßbohrung 6 jeder Einsatzpaßbuchse 3 der Reihe 12 eingeführte Paßstifte 13 an die diesen zugewandte Meßfläche 11a angeschlagen werden können. Bei dem dargestellten

Ausführungsbeispiel muß daher die Breite A des das absolute Nullmaß der gewünschten Distanz aufweisenden Meßstabs 56 mm betragen, wenn der Paßstiftdurchmesser 13 mit dem Paßbohrungsdurchmesser 6 übereinstimmt und jeweils die Peripherie der Paßstifte an der zugewandten Außenfläche 11a des Meßstabs anschlägt.

Man erkennt, daß man auf diese Weise eine extrem hochgenaue Positionierung der Einsatzpaßbuchsen zunächst in der x-Richtung vorgibt und sicherstellt.

Für die Endpositionierung in der y-Koordinatenrichtung (bei dem dargestellten Ausführungsbeispiel) kann ausgehend von einer ersten gegebenen Einsatzpaßbuchse diese zunächst - in Fig. 1 ist die Paßbuchse mit 3a bezeichnet - mit möglichst genauer Mittenzentrierung im Sinne der Vorfixierung befestigt, indem man die jeweiligen Flanschschrauben 8 anzieht. Es sei hier nochmals darauf hingewiesen, daß dieses Anziehen mit besonders großer Vorsicht und beinahe schon nur von Hand erfolgen darf, jedenfalls bei den nachfolgenden Einsatzpaßbuchsen, um jeden denkbaren Wärmeverzug hier zu vermeiden. Nachdem die erste Einsatzpaßbuchse 3a dann auf der Grundplatte 1 fixiert ist, wird zur hochgenauen Positionsbestimmung nun in der y-Koordinatenrichtung ein weiterer Meßstab 13 verwendet, der, wenn die Abstände der Einsatzpaßbuchsen in der Grundplatte 1 in allen Richtungen zueinander gleich sein sollen, das gleiche Dickenmaß A wie der Meßstab 11 für die Präzisionspositionsbestimmung in der x-Richtung aufweist. Man schlägt dann den Meßstab 14 mit seinen beiden Seiten - auch dieser Meßstab verfüg über ein absolutes Nullmaß im gewünschten Distanzabstand - an die in die Paßbohrungen 6 eingesetzten Paßzapfen oder Paßstifte 13 an und kann dann die nächstfolgende Einsatzpaßbuchse 3b nach unten in der Zeichenebene dargestellt, ebenfalls vorfixieren, also durch das Anziehen ihrer Flanschschrauben 8 auf der Grundplatte 1 befestigen.

Dieser Vorgang wird sinngemäß sich wiederholend fortgesetzt, bis nach Fertigung der ersten Reihe 12 mit der zweiten Reihe begonnen wird, indem man den Meßstab 11 nunmehr in die Position 11' hinüberlegt, in welcher die ursprünglich an der Außenleiste 10 angeschlagene Außenkante 11b des Meßstabs 11 in der Position 11' jetzt von der anderen Seite an die in ihren Paßbohrungen 6 belassenen Paßstifte 13 anschlägt. Hierdurch ergibt sich durch die gegenüberliegende Randkante 11a wieder die Anschlagposition für die Paßstifte 13 der nächsten Einsatzpaßbuchsenreihe und deren hochgenaue Positionierung zunächst in der x-Richtung und anschließend wieder sukzessive in der y-Richtung durch Anschlagen des zweiten Meßstabes 14, wie schon erläutert.

Hat man sich auf diese Weise durch Einmessen der jeweiligen Präzisionsposition der Einsatzbuchsen von der einen Seite bis zur anderen Seite der Grundplatte 1 gearbeitet und sämtliche Buchsen durch ihre Flanschschrauben 8 vorfixiert, dann wird nochmals eine Vermessung hochgenau in die x- und y-Richtungen vorgenommen sowie in der Diagonalen. Auch hierzu können Meßstäbe oder Meßflächen oder Meßelemente allgemein mit Endmaßen, also Nullmaßen verwendet werden, so daß beim Einmessen ausschließlich mit Anschlägen gearbeitet zu werden braucht.

Der letzte Herstellungsschritt besteht dann darin, daß die durch die lediglich kraftschlüssige Vorfixierung auf der Grundplatte 1 gehaltenen Einsatzpaßbuchsen nunmehr absolut formschlüssig endfixiert werden, und zwar mit Hilfe der für sich gesehen schon bekannten Eingießtechnik, indem nämlich in den verbleibenden Ringraum 15 (Fig. 2) zwischen dem Außenumfang des Buchsenteils 5 und dem Innenumfang der Vorbohrung 2 ein geeignetes aushärtbares Kunststoffmaterial eingebracht wird. Dies erfolgt vorzugsweise so, daß man die Grundplatte umdreht und die Ringzwischenräume einheitlich vergießt, wobei im übrigen bei der Herstellung durchaus darauf geachtet werden sollte, daß die Ringzwischenräume möglichst gleichförmig sind und nicht ein allzu starker außermittiger Versatz der Einsatzpaßbuchse in ihrer jeweiligen Bohrung auftritt; auch dies kann aufgrund der unterschiedlichen Aushärtebedingungen in diesem Fall gegebenenfalls noch zu Toleranzverschiebungen in der Genauigkeit führen.

Nach der Aushärtung sind die Einsatzpaßbuchsen absolut und hochpräzise in der Grundplatte 1 positioniert und die einmalig benötigte Meisterplatte ist fertig.

Der weitere Herstellungsvorgang für die Aufnahmeplatten erfolgt dann so, daß beispielsweise auf die in ihren Paßbohrungen 6 belassenen Paßstifte 13 Einsatzbuchsen aufgesetzt werden, die jetzt für die jeweils herzustellende Aufnahmeplatte bestimmt sind. Anschließend wird auf die Meisterplatte eine jeweilige Aufnahmeplatte ebenfalls mit Vorbohrungen im größeren Durchmesser wie der Außendurchmesser der auf die Paßstifte 13 aufgesetzten weiteren Einsatzbuchsen aufgelegt und der sich hierbei bildende Ringabstand zwischen den Vorbohrungen in der Aufnahmeplatte und den Außendurchmessern ihrer Einsatzbuchsen mit dem aushärtbaren Kunststoffmaterial vergossen.

Da dies alles mit hochgenauer Präzision erfolgt, ist ein Abheben der Aufnahmeplatte von der Meisterplatte möglicherweise schwierig; daher kann man die Trennung so vornehmen, daß man die Paßstifte 13 aus den Einsatzbuchsen in der Aufnahmeplatte nach deren Aushärtung nach unten fortlaufend jeweils herausdrückt, so daß die Aufnahmeplatte zwangslos von der Meisterplatte freikommt. Die Genauigkeit der Meisterplatte hat sich dann nach Art eines Erbgesetzes praktisch unverändert auf die jeweils hergestellte Aufnahmeplatte übertragen. Dies ist jedoch nicht Gegenstand vorliegender Erfindung und im übrigen in der DE-PS 25 57 101 erläutert.

**Patentansprüche**

1. Verfahren zur Herstellung einer Meisterplatte mit in vorgegebenen Koordinatenabständen zur Bildung eines Rastersystems angeordneten, hochgenauen Paßbohrungen oder Paßstiften, insbesondere als Ausgangs-Schablonen-Lehrenplatte für die vervielfältigende Herstellung von Aufnahmeplatten für Rasterspannsysteme, wobei in eine Grundplatte Vorbohrungen im gegebenen Rasterabstandsmaß mit normaler Genauigkeit gebohrt, in diese Vorbohrungen Einsatzpaßbuchsen mit geringerem Außendurchmesser unter Bildung eines Ringzwischenraums eingesetzt, die Einsatzpaßbuchsen in ihrer jeweiligen Präzisionsposition mechanisch fixiert und anschließend in den Ringzwischenraum ein aushärtbares Kunststoffmaterial eingeführt und zur Aushärtung gebracht wird, dadurch gekennzeichnet, daß die genaue Position der Einsatzpaßbuchsen (3) nach dem Einsetzen in die Vorbohrungen (2) der Grundplatte (1) durch Messung bestimmt und die mechanische Fixierung durch Befestigung jeder Einsatzpaßbuchse (3) an der Grundplatte (1) fortlaufend und auf den Meßvorgang abgestimmt, erfolgt.

2. Verfahren nach Anspruch 1, dadurch gekennzeichnet, daß zur Einmessung der Präzisionspositionen der jeweiligen Einsatzpaßbuchsen von einem grundplattenseitigen Anschlag ausgegangen und eine Positionierung in einer gegebenen Koordinatenrichtung (x-Richtung) festgelegt wird und daß anschließend von einer willkürlich in ihrer Position festgelegten gegebenen Einsatzbuchse unter Rückbeziehung auf deren Position Abstandsmessungen zur Präzisionspositionierung nachfolgender Buchsen vorgenommen werden.

3. Verfahren nach Anspruch 1 oder 2, dadurch gekennzeichnet, daß zur Gewinnung eines ersten grundplattenseitigen Anschlags eine Meßleiste (10) an eine Grundplatten-Randkante (1a) angelegt und an die Meßleiste ein Meßstab (11) mit der gewünschten Distanz entsprechendem Nullmaß angeschlagen und an die freie Randkante des Nullmaß-Meßstabs (11) in die Paßbohrungen (6) jeder Einsatzpaßbuchse eingesetzte Paßstifte (13) angeschlagen werden zur Fixierung in der ersten Koordinatenrichtung (x-Richtung).

4. Verfahren nach einem der Ansprüche 1 bis 3, dadurch gekennzeichnet, daß ausgehend von einer ersten in ihrer Position vorfixierten Einsatzpaßbuchse (3a) ein weiterer, Nullmaß bezüglich der gewünschten Distanz aufweisender Meßstab (14) vorgesehen ist, der zur Präzisionspositionierung in der verbleibenden Koordinatenrichtung (y-Richtung) an den Paßstift (13) der ersten vorfixierten Einsatzpaßbuchse (3a) angelegt und an deren andere Randkante der Paßstift (13) der in der Reihe jeweils nachfolgenden Einsatzpaßbuchse (3b) angeschlagen wird, bis die erste Reihe von Einsatzpaßbuchsen endpositioniert und vorfixiert ist und daß anschließend der erste Meßstab (11) umgelegt und mit seiner einen Randkante (11b) an die Paßstifte (13) der ersten Reihe (12) von endpositionierten Einsatzpaßbuchsen angeschlagen wird und daß an seiner gegenüberliegenden Randkante die Paßstifte (13) der nächsten Reihe zur Vorfixierung zunächst in der ersten Koordinatenrichtung (x-Richtung) angeschlagen werden.

5. Verfahren nach einem der Ansprüche 1 bis 4, dadurch gekennzeichnet, daß nach dem Einmessen und der Endpositionierung mit Vorfixierung sämtliche Einsatzpaßbuchsen der jeweiligen Grundplatte (1) eine erneute Abstandsmessung in der x- und der y-Richtung und in den diagonalen Richtungen vorgenommen wird, daß anschließend die Grundplatte umgedreht und in sämtliche Ringzwischenräume das aushärtbare Kunststoffmaterial eingebracht und ausgehärtet wird.

6. Verfahren nach einem der Ansprüche 1 bis 5, dadurch gekennzeichnet, daß zur Vorfixierung ein stirnseitiger Randflansch (4) jeder Einsatzpaßbuchse mit Bezug auf deren Paßbohrung (6) hochgenau in seiner Auflagefläche bearbeitet (geschliffen) wird und die jeweilige Einsatzpaßbuchse dadurch nach dem Einmessen auf der Grundplatte (1) befestigt wird, daß der Randflansch auf der Auflagefläche der Grundplatte festgeschraubt wird.

7. Verfahren nach Anspruch 6, dadurch gekennzeichnet, daß der Randflansch im Umfang gleichmäßig verteilte, vorzugsweise drei Senkbohrungen (7) aufweist, in welche mit hinreichendem Spiel Schrauben zur Justierung durch das Einmessen eingesetzt und nach dem Einmessen festgeschraubt werden.

## Claims

1. A method of producing a master plate with high-precision fitting bores or fitting pins disposed at predetermined coordinate distances to form a grid system, in particular in the form of a master template for the multiple production of receiver plates for grid clamping systems, in which preliminary bores (2) are bored at the predetermined grid interval with a normal degree of accuracy in a base plate (1), insert fitting bushes (2) with a smaller external diameter are inserted in these preliminary bores so as to form an annular interspace, the insert fitting bushes are mechanically fixed in their respective precisely determined position, and an age-hardenable plastics material is then introduced in the annular interspace (15) and allowed to harden, characterized in that the precise position of the insert fitting bushes (3) is determined by measurement after insertion into the preliminary bores (2) of the base plate and is fixed mechanically by securing each insert fitting bush (3) to the base plate (1) in a progressive manner adapted to the measurement procedure.

2. A method according to Claim 1, characterized in that in order to locate the precisely determined positions of the respective insert fitting bushes, a stop on the side of the base plate is taken as a starting point and a positioning in a given coordinate direction (x-direction) is determined, and subsequently distance measurements are taken from a given insert bush set arbitrarily in its position with reference to the position thereof for the precision positioning of subsequent bushes.

3. A method according to Claim 1 or 2, characterized in that in order to obtain a first stop on the side of the base plate a measurement bar (10) is applied to an edge (1a) of the base plate and a measurement rod (11) is set against the measurement bar with a zero measure corresponding to the desired distance, and fitting pins (13) inserted in the fitting bores (6) of each insert fitting bush are set against the free edge of the zero-measure measurement rod (11) for fixing in the first coordinate direction (x-direction).

4. A method according to any one of Claims 1 to 3, characterized in that starting from a first insert fitting bush (3a) preliminarily fixed in position, a further measurement rod (14) is provided which constitutes a zero measure for the desired distance and which, for precision positioning in the remaining coordinate direction (y-direction), is set against the fitting pin (13) of the preliminarily fixed first insert fitting bush (3a) and the fitting pin (13) of the insert fitting bush (3b) following in the row in each case is set against the other edge of the further measurement rod until the first row of insert fitting bushes is finally positioned and preliminarily fixed, and the first measurement rod (11) is then turned over and it is set with one of its edges (11b) against the fitting pins (13) of the first row (12) of finally positioned insert fitting bushes, and the fitting pins (13) of the following row are set against the opposite edge of the said measurement rod (11) for preliminary fixing initially in the first coordinate direction (x-direction).

5. A method according to any one of Claims 1 to 4, characterized in that after the position location and the final positioning with preliminary fixing of all the insert fitting bushes of the respective base plate (1) a further distance measurement is made in the x-direction and the y-direction and in the diagonal directions, the base plate is then turned round and the age-hardenable plastics material is introduced into all the annular interspaces and is hardened.

6. A method according to any one of Claims 1 to 5, characterized in that, for the preliminary fixing, an end flange (4) of each insert fitting bush is machined, e.g. ground, very precisely on its support face with reference to its fitting bore (6). and after position location the respective insert fitting bush is secured on the base plate (1) by the end flange being screwed tight on the support surface of the base plate.

7. A method according to Claim 6, characterized in that the end flange comprises preferably three countersunk bores (7) which are uniformly distributed about the periphery and into which screws for adjustment according to the position location are inserted with sufficient play and are screwed tight after the location.

## Revendications

1.- Procédé pour la réalisation d'une plaque maîtresse avec des perçages d'ajustement ou des broches d'ajustement à haute précision disposés avec des intervalles de coordonnées prédéfinis pour constituer un système de quadrillage, constituant notamment une plaque étalon de gabarit de départ pour la réalisation de multiples plaques réceptrices destinées à des systèmes de bridage en quadrillage, procédé dans lequel des perçages préalables (2) sont forés à des cotes d'intervalles de quadrillage données avec une précision normale dans une plaque de base (1), des douilles d'insertion (2) avec un diamètre externe plus réduit étant mises en place dans ces perçages préalables en ménageant un espace annulaire intermédiaire, les douilles d'insertion étant fixées mécaniquement dans leur position précise respective et enfin un matériau en une matière synthétique durcissable étant introduit dans l'espace annulaire intermédiaire (15) puis durci, procédé caractérisé en ce que la position précise des douilles d'insertion (3) après leur mise en place dans les perçages préalables (2) de la plaque de base (1) est déterminée par mesure et que la fixation mécanique s'effectue par assujetissement de chaque douille d'insertion (3) sur la plaque de base (1) de façon successive et en accord avec le processus de mesure.

2.- Procédé selon la revendication 1, caractérisé en ce que pour l'étalonnage des positions précises des douilles d'insertion respectives, on part d'une butée latérale à la plaque de base et on établit un positionnerent dans une direction donnée des coordonnées (direction x) et ensuite en partant d'une douille d'insertion donnée fixée arbitrairement dans sa position, des mesures d'intervalles se référant à cette position sont opérées pour le positionnement précis des douilles suivantes.

3.- Procédé selon la revendication 1 ou 2, caractérisé en ce que pour obtenir une première butée latérale à la plaque de base, une barrette de mesure (10) est appliquée contre une arête de bordure (1a) d'une plaque de base et qu'une règle (11) avec une cote zéro correspondant à l'intervalle souhaité est mise en butée contre cette barrette de mesure, puis des broches d'ajustement (13) mises en place dans chacune des douilles d'insertion sont amenées en butée contre l'arête libre de bordure de la règle de cote zéro (11) dans les perçages d'ajustetent (6) pour permettre la fixation selon la première direction de coordonnées (direction x).

4.- Procédé selon une des revendications 1 à 3, caractérisé en ce qu'en partant d'une première douille d'insertion (3a) préalablement fixée dans sa position, il est prévu une autre règle (14) correspondant à la cote zéro par rapport à l'intervalle souhaité, qui pour permettre le positionnement précis dans la direction de coordonnées restante (direction y) est appliquée contre la broche d'ajustement (13) de cette première douille d'insertion (3a) fixée au préalable, et est mise en butée par son autre arête de bordure contre la broche d'ajustement (13) de la douille d'insertion (3b) suivante dans la rangée, jusqu'à ce que la première rangée de douilles d'insertion ait reçu son positionnement final et soit fixée de façon provisoirs et ensuite la première règle (11) est déplacée et l'une de ces arêtes de bordure (11b) est mise en butée contre les broches d'ajustement (13) de la première rangée (12) de douilles d'insertion ayant reçu leur positionnement final, et ensuite les broches d'ajustement (13) de la rangée suivante sont amenées en butée contre le bord opposé de cette règle pour permettre la pré-fixation tout d'abord dans la première direction des coordonnées (direction x).

5.- Procédé selon une des revendications 1 à 4, caractérisé en ce qu'après l'étalonnage et le positionnement final avec pré-fixation de l'ensemble des douilles d'insertion de la plaque de base (1), il est procédé à une nouvelle mesurs de l'intervalle dans la direction x et dans la direction y ainsi que dans les directions diagonales, et qu'ensuite la plaque de base est retournée et qu'un matériau en une matière synthétique durcissable est introduit dans l'ensemble des espaces annulaires intermédiaires puis durci.

6.- Procédé selon une des revendications 1 à 5, caractérisé en ce que pour la pré-fixation, une bride frontale de bordure (4) de chaque douille d'insertion est usinée, par exemple rectifiée, avec une haute précision par rapport à son perçage d'ajustement (6) sur sa surface d'appui, et la douille d'insertion correspondante après son étalonnage sur la plaque de base (1) est fixée en vissant cette collerette de bordure sur la surface d'appui de la plaque de base.

7.- Procédé selon la revendication 6, caractérisé en ce que la collerette de bordure comporte, de préférence, trois perçages chambrés (7) uniformément répartis sur sa périphérie dans lesquels sont mis en place avec un jeu suffisant des vis qui permettent l'ajustement par l'étalonnage et qui sont serrées après cet étalonnage.

Fig.1

Fig.2